# EUROPÄISCHE PATENTANMELDUNG

(11) **EP 4 039 970 A1**
(43) Veröffentlichungstag der Anmeldung: **10.08.2022**
(21) Anmeldenummer: 21155383.9
(22) Anmeldetag: 05.02.2021
(51) Int. Cl.: F03D 17/00, G01M 5/00, G01M 13/00

(54) **ZUVERLÄSSIGES ERKENNEN UND BEWERTEN VON EXTREMLASTEN ZUM SCHUTZ VOR GEWALTBRUCH**

(71) Anmelder: Flender GmbH, 46395 Bocholt (DE)
(72) Erfinder: Meis, Jean-Andre, 48249 Duelmen (DE); Hußmann, Carsten, 46397 Bocholt (DE)
(74) Vertreter: Michalski Hüttermann & Partner Patentanwälte mbB

(57) **Zusammenfassung**

Die Erfindung betrifft ein Verfahren zum Erkennen und Bewerten von Extremlasten zum Schutz vor Gewaltbruch an einem Maschinenelement, wobei eine Belastungs-Zeitfunktion (1) mittels mindestens einem Sensor am Maschinenelement gemessen wird. Zur Reduzierung der Gefahr eines Gewaltbruchs am Maschinenelement wird vorgeschlagen, dass die Belastungs-Zeitfunktion (1) in Zeitintervalle (Δt) zerlegt wird, wobei bei Vorliegen einer relevanten Belastung in dem Zeitintervall (Δt) ein durch den Sensor erfasster Maximalwert (M) der Belastungs-Zeitfunktion (1) als Extremwert (51) gespeichert wird, wobei aus den gespeicherten Extremwerten (51) eine statistische Verteilungsfunktion (61) ermittelt wird, wobei aus der statistischen Verteilungsfunktion (61) und einer Restlebensdauer die Ausfallwahrscheinlichkeit (71) des Maschinenelementes durch Gewaltbruch in einer für das Maschinenelement vorgesehenen Lebensdauer ermittelt wird, wobei sich die Restlebensdauer als Differenz der vorgesehenen Lebensdauer und einer Betriebsdauer des Maschinenelementes ergibt. Die Erfindung betrifft weiter ein Maschinenelement, ein Getriebe oder eine Windkraftanlage mit einer Überwachungseinrichtung, wobei die Überwachungseinrichtung zur Durchführung eines derartigen Verfahrens eingerichtet ist.

## Beschreibung

Die Erfindung betrifft ein Verfahren zum Erkennen und Bewerten von Extremlasten zum Schutz vor Gewaltbruch an einem Maschinenelement, wobei eine Belastungs-Zeitfunktion mittels mindestens einem Sensor am Maschinenelement gemessen wird. Die Erfindung betrifft weiter eine Überwachungseinrichtung, eingerichtet zur Durchführung eines derartigen Verfahrens. Ferner betrifft die Erfindung ein Maschinenelement, insbesondere eine Welle oder eine Verzahnung eines Getriebes oder eine Welle einer elektrischen Maschine, sowie ein Getriebe und eine Windkraftanlage.

Im Betrieb von Maschinen und Anlagen sowie entsprechenden Teilen davon entstehen je nach Betriebsart mehr oder weniger regelmäßig auftretende Extremlasten, welche sich in ihrer Lasthöhe aufgrund von stochastischen Einflussgrößen unterscheiden. Diese Komponenten werden allgemein auch als Maschinenelemente bezeichnet und beziehen sich auf Anlagen, Maschinen oder Teile davon. Extremlasten werden auch als Sonderlasten bezeichnet. Überschreiten diese Lasten einen bestimmten Wert, so führt dies zur Zerstörung des Maschinenelements durch Gewaltbruch. Vor der Grenzlast, bei welcher Zerstörung eintritt, gibt es weitere Grenzen, welche bei Überschreitung zumindest den Weiterbetrieb der Anlage einschränken. Beispiele dafür sind die Vorschädigung von Komponenten sowie eine starke Verformung. Sowohl bei der Auslegung der Anlage und den dazugehörigen Maschinenelementen als auch während des Betriebs ist die Kenntnis über die Häufigkeit und Größe solcher Ereignisse wichtig, um einen sicheren Betrieb der Anlage zu gewährleisten.

Sowohl in der Auslegung als auch im Betrieb der Anlagen ist der Umgang mit solchen Extremlasten bzw. Sonderlasten schwierig. In der Auslegung werden diese Sonderereignisse häufig nur abgeschätzt und mit Sicherheits- oder Stoßfaktoren berücksichtigt, häufig führt dies zu sehr konservativen Auslegungen. Im Betrieb ist eine Reaktion vor solchen Ereignissen heute kaum realisierbar. Es ist zwar möglich, eine Warnung zu geben, jedoch erfolgt die Warnung häufig zu spät, weil die Grenzlast schon überschritten wurde und ein Schaden eingetreten ist oder es wird eine Warnmeldung ausgegeben, wenn eine niedrigere Schwelle überschritten wird, die aufgrund von Sicherheitsfaktoren noch weit von der Beschädigung entfernt ist.

Für eine möglichst exakte Bemessung der Lebensdauer von Maschinen und Anlagen sind ebenfalls entsprechend genaue Lastannahmen von Extrembelastungen notwendig. Diese können aus Simulationen, Abschätzungen oder Messungen gewonnen werden. Um die Last-Zeitverläufe in einer Lebensdauerberechnung zu nutzen, werden diese meist klassiert. Diese Klassierung sorgt für die notwendige Reduktion des Datenvolumens und eine Reduktion der Berechnungsaufwände, da nun nur noch die Schädigungen der einzelnen Kollektivstufen ermittelt werden muss und nicht mehr die gesamte Zeitreihe während der Berechnung abgefahren wird. Das heute führende Klassierverfahren ist die Rainflow-Zählung, als Berechnungsverfahren werden dabei diverse Modifikationen der Schadensakkumulation gegen Werkstoff- oder Bauteilwöhlerlinien angewendet.

Auf Seiten der Berechnung gibt es verschiedene pragmatische Ansätze, die fehlende Genauigkeit zu kompensieren. Dies geschieht üblicherweise durch erhöhte Sicherheitsfaktoren. Ein weiterer Ansatz ist die sogenannte relative Minerregel, bei welcher die zulässige Schadenssumme an die Betriebserfahrungen angepasst wird. Dabei wird zunächst gegen eine Schadensumme 1,0 ausgelegt. Wenn die Betriebserfahrung nun von der berechneten Lebensdauer abweicht, wird bei zukünftigen Auslegungen dies mittels einer modifizierten zulässigen Schädigungssumme berücksichtigt. Eine weitere Alternative nutzt Betriebslastversuche und die darauf beruhende Wöhlerlinien. Hierbei werden die tatsächlichen Betriebslasten in Blöcke zerlegt und entsprechende Wöhlerlinien ermittelt. Dieses Vorgehen ist sehr aufwendig und nur bei großen Fertigungsstückzahlen zu rechtfertigen.

Der Erfindung liegt die Aufgabe zugrunde, die Gefahr eines Gewaltbruchs beim Betrieb eines Maschinenelements aufgrund von Extrembelastungen zu reduzieren.

Diese Aufgabe wird durch ein Verfahren zum Erkennen und Bewerten von Extremlasten zum Schutz vor Gewaltbruch an einem Maschinenelement gelöst, wobei eine Belastungs-Zeitfunktion mittels mindestens einem Sensor am Maschinenelement gemessen wird, wobei die Belastungs-Zeitfunktion in Zeitintervalle zerlegt wird, wobei bei Vorliegen einer relevanten Belastung in dem Zeitintervall ein durch den Sensor erfasster Maximalwert der Belastungs-Zeitfunktion als Extremwert gespeichert wird, wobei aus den gespeicherten Extremwerten eine statistische Verteilungsfunktion ermittelt wird, wobei aus der statistischen Verteilungsfunktion und einer Restlebensdauer die Ausfallwahrscheinlichkeit des Maschinenelementes durch Gewaltbruch in einer für das Maschinenelement vorgesehenen Lebensdauer ermittelt wird, wobei sich die Restlebensdauer als Differenz der vorgesehenen Lebensdauer und einer Betriebsdauer des Maschinenelementes ergibt. Ferner wird diese Aufgabe durch ein Maschinenelement, insbesondere eine Welle oder eine Verzahnung eines Getriebes oder eine Welle einer elektrischen Maschine, mit einer Überwachungseinrichtung gelöst, wobei die Überwachungseinrichtung zur Durchführung eines derartigen Verfahrens eingerichtet ist. Die Aufgabe wird weiter durch ein Getriebe mit einem derartigen Maschinenelement, sowie durch eine Windkraftanlage mit einem derartigen Maschinenelement oder einem derartigen Getriebe gelöst.

Weitere vorteilhafte Ausgestaltungen der Erfindung sind in den abhängigen Ansprüchen angegeben.

Der Erfindung liegt unter anderem die Erkenntnis zugrunde, dass sich ein Schutz vor einem Gewaltbruch durch Extremlasten über eine Extremwertstatistik bewerkstelligen lässt. Dabei hat es sich als sinnvoll erwiesen, bei der Lastdatenerfassung und Auswertung wie folgt vorzugehen. An einem Maschinenelement wie beispielsweise einer Eingangswelle eines Getriebes oder einer Welle einer elektrischen Maschine wird die Belastungs-Zeitfunktion gemessen. Dazu wird der zeitliche Verlauf von Messwerten eines oder mehrerer Sensoren verwendet. Bei den zu messenden Größen kann es sich beispielsweise um mechanische, elektrische oder thermische Größen handeln. Eine relevante Belastung liegt dann vor, wenn das entsprechende Ereignis einen Einfluss auf die Lebensdauer des Maschinenelements hat. Die Messung wird in Echtzeit in Zeitintervalle geeigneter Größe zerlegt, und von jedem Intervall wird der Maximalwert der Belastung gespeichert, wenn eine relevante Belastung vorliegt. Die Länge des Zeitintervalls richtet sich in erstere Linie nach dem Betriebsverhalten der Anlage, in dem das Maschinenelement angeordnet ist. Insbesondere bei sich wiederholenden Prozessen hat es sich als vorteilhaft erwiesen, die Länge des Zeitintervall so zu wählen, dass diese der Periodendauer des wiederholenden Prozesses entspricht. Ein Beispiel in der Produktion ist beispielsweise das Auffüllen von Material. So kann vorteilhafterweise das Zeitintervall von einem Auffüllvorgang bis zum nächsten Auffüllvorgang gewählt werden.

Die Messwerte der Belastungs-Zeitfunktion können zur Bewertung einer relevanten Belastung und zur Verbesserung der Genauigkeit bei der Bestimmung der Ausfallwahrscheinlichkeit zusätzlich mit einem Belastungsmuster verglichen werden. Aus bisherigen Betriebserfahrungen oder gezielten Messungen sind eine Vielzahl von Belastungsmuster schon vor der Aufnahme des Betriebs des Maschinenelements oder der dazugehörigen Komponente der Anlage bereits bekannt. Diese Belastungsmuster werden daher auch als vorbestimmte Belastungsmuster bezeichnet und liegen bei der Inbetriebsetzung des Maschinenelements oder der entsprechenden Komponente/Anlage bereits vor. Diese können beispielsweise in Versuchen oder Simulationen ermittelt werden. Diese können optional zur Verbesserung der Bestimmung der Ausfallwahrscheinlichkeit ebenfalls in die Berechnung einfließen. Diese Belastungsmuster weisen charakteristische Muster auf, die direkt mit den Messwerten der Sensoren oder nach Auswertung der Messwerte der Sensoren verglichen werden können. Dies können beispielsweise physikalische Größen sein oder auch Werte die sich durch eine Auswertung der Daten, beispielsweise eine Frequenzanalyse mittels Fouriertransformation, ergeben. Die Belastungsmuster und die dazugehörigen charakteristischen Muster können beispielsweise für Vorgänge aus unterschiedlichen Betriebssituation wie Anfahren, Durchfahrt einer Eigenfrequenz, normaler Betrieb, Notstop oder Stillstand ermittelt werden. Diese charakteristischen Muster können beispielsweise bestimmte Mittellast zu Amplitudenverhältnisse oder bestimmte Abfolgen von Amplituden innerhalb eines definierten Zeitraumes oder Frequenzraumes sein.

Die charakteristischen Merkmale der jeweiligen Belastungsmuster können in einem Speicher abgelegt werden.

Neben der einfachen Klassierung des Last-Zeitverlaufes ist es optional mit den Belastungsmustern mittels einer Mustererkennung mit den Messwerten des Sensors oder Sensoren möglich zu erfassen, wenn einer dieser Zustände mit relevanter Belastung durchlaufen wird. Dazu können mittels der Mustererkennung die Belastungsmuster mit den Messwerten oder den Auswertungen der Messwerte des Sensors oder Sensoren verglichen werden. Wenn dann die Mustererkennung einen vorher gespeicherten Verlauf identifiziert, so wird ein dem Belastungsmuster zugeordneter Zähler hochgesetzt. So entsteht neben dem normalen Belastungskollektiv ein Kollektiv, welches die Häufigkeit von bestimmten belastungsbeschreibenden Ereignissen speichert.

Dieses zusätzliche Kollektiv kann dann beispielsweise dazu genutzt werden, um gezielt Festigkeitskennwerte für möglichst relevante Last-Zeitreihen zu ermitteln, indem Bauteil- oder Probenversuche mit entsprechenden Betriebslasten beaufschlagt werden. Ein weiterer Nutzen besteht darin, das über das bessere Verständnis des Lastgeschehens Anlagen gezielt optimiert werden können, beziehungsweise können schädigende Betriebszustände gezielt identifiziert und gegebenenfalls eliminiert werden.

Sobald eine ausreichende Anzahl an Zeitintervallen durchlaufen wurde, also bereits nach kurzer Betriebszeit des Maschinenelements, kann durch einen Algorithmus, wie beispielsweise nach Maximum Likelihood, die statistische Verteilungsfunktion der Extremwerte der Anlage bestimmt werden. Zur Erhöhung der Genauigkeit der statistischen Aussage können auch die Zählerstände für das Auftreten der jeweiligen Belastungsmuster in die Berechnung mit eingehen. Hierzu eignet sich z.B. die generalisierte Extremwertverteilung. Dieser Verteilungsfit wird während des Anlagenbetriebs regelmäßig wiederholt. Dadurch wird zum einem der Situation Rechnung getragen, das mit zunehmender Betriebsdauer die Konfidenzintervalle aufgrund der sich stetig vergrößernden Stichprobe verkleinern, und zum anderen lässt sich dadurch gegebenenfalls auf ein geändertes Betriebsverhalten und dessen Konsequenzen schließen. Mit der so gefitteten Verteilungsfunktion kann die Lastdatenerfassung bzw. Lastdatenauswertung dann die Wahrscheinlichkeit bestimmen, mit der während der noch zu absolvierenden Restlebensdauer ein Grenzwert der Belastung überschritten wird. Die zu absolvierende Restlebensdauer wird auch einfach als Restlebensdauer bezeichnet und ergibt sich aus der Differenz der vorgesehenen Lebensdauer und der bereits verbrauchten Lebensdauer, also der Betriebsdauer. Die Betriebsdauer bezeichnet die Zeitdauer, für die sich das Maschinenelement bereits im Betrieb befand.

Somit kann zu jedem Betriebszeitpunkt eine Wahrscheinlichkeit angegeben werden, mit der das Maschinenelement oder die dazugehörige Komponente/Anlage im sicheren Zustand betrieben werden kann. Ebenso ist eine Wahrscheinlichkeit für den Ausfall durch Gewaltbruch angebbar. Diese Informationen kann sowohl für den Betrieb des Maschinenelements und der dazugehörigen Komponente/Anlage als auch für die Wartung, insbesondere für die präventive Wartung, genutzt werden.

Ein besonderer Vorteil des vorgeschlagenen Verfahrens liegt darin, dass von einer reinen Warnung basierend auf dem Last-Istwert, welche in der Regel entweder zu spät erfolgt, wenn die Belastung bereits zu hoch war, oder von einer Warnung aufgrund einer mit Sicherheitsfaktoren belegten Lastgrenze, welche sehr konservativ ist, auf eine statistische Bewertung der Extremwerte sowie deren Häufigkeit und auf eine Warnung bezüglich einer Auftrittswahrscheinlichkeit einer Grenzüberschreitung gewechselt wird. Dadurch erhält der Betreiber eine Bewertung seines gesamten Anlagenbetriebes, auch im Hinblick auf die noch zu absolvierende Betriebszeit und kann damit sein Ausfallrisiko hinsichtlich Überlasten bewerten und betrieblich reagieren.

Ein weiterer Vorteil des vorgeschlagenen Verfahrens liegt darin, dass die klassische Zählung von Schwingspielen in den Lastzeitverläufen erweitert wird, um die Speicherung der Häufigkeit von bestimmten charakteristischen Lastabläufen, welche aus Betriebserfahrungen bekannt sind, sowie deren Extremwerte. Dieses Konzept stellt eine erhebliche Verbesserung der klassischen Klassierverfahren dar, ohne dass der notwendige Speicherbedarf im größeren Bedarf gesteigert wird. Das so gewonnene Prozesswissen kann sowohl in der Steuerung und Regelung der Anlagen verwendet werden als auch Grundlage für Verbesserungen in der Lebensdauerberechnung und Versuchsplanung sein. Ebenso können die erweiterten Kollektive bei der Entwicklung neuer Anlagen genutzt werden.

Durch das Zählen der Belastungsmuster und das Speichern der Reihenfolge der Belastungsmuster, kann der Prozessschritt identifiziert werden, der zu den größten bzw. häufigsten Extremlasten führt, ohne großen Speicherbedarf zum Abspeichern der Rohdaten zu benötigen.

Durch dieses Prozesswissen kann der Betrieb der Anlage gezielt verbessert und Extremlasten und dadurch resultierende Gewaltbrüche proaktiv verhindert werden.

Besonders vorteilhaft ist die Anwendung des Verfahrens bei Getrieben. Diese weisen eine Vielzahl von Maschinenelementen auf. Gleichzeitig ist das Getriebe für den Betrieb einer entsprechenden Anlage von großer Bedeutung, da der Ausfall des Getriebes meist den Stillstand der ganzen Anlage bedeutet. Ein rechtzeitiges Erkennen der Gefahr von Gewaltbrüchen kann die Betriebszuverlässigkeit und die Betriebssicherheit deutlich erhöhen.

Des Weiteren ist die Anwendung des Verfahrens in Windkraftanlagen vorteilhaft. Da diese oftmals an entlegenen Orten errichtet werden, kann der Einsatz des Verfahrens die Gefahr des Ausfalls verringern und somit einen störungsfreien Betrieb sicherstellen. Darüber hinaus birgt auch gerade das Auftreten von Gewaltbrüchen bei Windkraftanlagen das Risiko der Verletzung von Personen. Dieses Risiko kann durch das vorgeschlagene Verfahren deutlich reduziert werden.

Bei einer vorteilhaften Ausgestaltung der Erfindung wird eine Warnung ausgegeben, wenn die Ausfallwahrscheinlichkeit einen vorgegebenen Grenzwert überschreitet. Derzeit wird nicht aus solchen Warnmeldungen auf die Wahrscheinlichkeit geschlossen, dass während der spezifizierten Lebensdauer der Anlage eine Grenzlast überschritten wird.

Der Betreiber erhält damit eine Warnung nicht im Hinblick auf den aktuellen Lastzustand, sondern im Hinblick auf das gesamte Betriebsverhalten der Anlage mit einem Ausblick auf die Restbetriebszeit. Diese kann dann in eine geänderte Betriebsführung münden, die eine Verlängerung der Restlebensdauer ermöglicht. Alternativ ist es möglich, Wartungsarbeiten zeitlich genauer zu planen und Ersatzteile rechtzeitig vorzusehen. Dies erhöht die Effizienz der Wartungstätigkeiten. Optional kann bei einer Vielzahl von derart überwachten Maschinenelementen mittels geeigneter Übertragungsfunktionen aus der Belastungs-Zeitfunktion die jeweilige Beanspruchungs-Zeitfunktion der einzelnen Maschinenelemente der Anlage bestimmt werden, um dann die Auswertung für jedes Maschinenelement einzeln durchzuführen.

Bei einer weiteren vorteilhaften Ausgestaltung der Erfindung wird die zeitliche Reihenfolge der zu den jeweiligen aufgetretenen relevanten Belastungen zugehörigen Belastungsmuster gespeichert. Aufgrund der Klassierung gehen ansonsten einige Informationen der Last-Zeitreihe verloren. Als vorteilhaftes Beispiel ist die zeitliche Abfolge der Schwingspiele zu nennen. Dieser Verlust kann in vielen Fällen die Vorhersagegenauigkeit der Lebensdauerrechnung reduzieren. Durch die Speicherung der Reihenfolge kann dieses Kollektiv, beispielsweise durch Speicherung des entsprechenden Vorgängers des aktuell erkannten Belastungsmusters, für die Berechnung der Ausfallwahrscheinlichkeit verwendet werden. Dadurch können ohne großen Speicherplatzbedarf wichtige Informationen über das Betriebsverhalten der Anlage erzielt werden, da nun die Reihenfolge des Auftretens der unterschiedlichen oder gleichen Belastungsmuster als Information vorliegt. Das Ereigniskollektiv gibt eine Übersicht wie oft ein bestimmtes Lastmuster auf ein bestimmtes anderes Lastmuster folgt. Auch daraus lassen sich Rückschlüsse auf die Belastung des Maschinenelements ziehen. Dies gilt sowohl für das Verhalten im Betrieb wie auch für die Auslegung zukünftiger Maschinenelemente oder Anlagen.

Bei einer weiteren vorteilhaften Ausgestaltung der Erfindung wird bei sich wiederholenden Zeitverläufen der Belastungs-Zeitfunktion ein neues Belastungsmuster in Abhängigkeit von den gemessenen Werte der Belastungs-Zeitfunktion ermittelt, wobei das neue Belastungsmuster zur Menge der Belastungsmuster hinzugefügt wird. Diese weitere vorteilhafte Ausgestaltung besteht darin, dass während der Messung durch die Sensoren der Musterkatalog, also die Menge der Belastungsmuster, autonom erweitert wird. Ein möglicher Ansatz hierfür ist eine ständige Zwischenspeicherung des Lastzeitverlaufes über einen definierten Zeitraum, um diesen dann auf weitere, im Katalog noch nicht abgelegte Muster zu prüfen. Wenn eine bestimmte Lastfolge sich beispielsweise innerhalb des definierten Zeitraumes ausreichend oft, das bedeutet häufiger als in einer festgelegten Schranke definiert, wiederholt, so ist der Katalog, also die Menge der Belastungsmuster entsprechend um dieses neue Belastungsmuster zu erweitern. Eine weitere alternative oder ergänzende Möglichkeit zur autonomen Erweiterung der Belastungsmuster liegt darin, dass eine Triggerschwelle, analog zu einer Eventtriggerung bei Sonderereignissen, vorgegeben wird, ab welcher das Signal als neues Belastungsmuster als derart relevant erachtet wird, dass es in die Menge der Belastungsmuster aufgenommen wird. Das Hinzufügen kann beispielsweise derart geschehen, dass das Signal, das das neue Belastungsmuster beschreibt, für einen definierten Zeitraum zwischengespeichert wird und die dazugehörigen charakteristischen Merkmale gespeichert werden. Es erfolgt eine anschließende vorläufige Erweiterung des Kataloges. Wenn das Ereignis innerhalb eines weiteren definierten Zeitraumes nicht erneut auftritt, so handelt es sich nicht um ein relevantes Belastungsmuster und das vorläufige Referenzmuster kann wieder aus dem Katalog gelöscht werden. Falls es jedoch erneut auftritt verbleibt es dauerhaft in der Menge der Belastungsmuster.

Die zusätzliche autonome Mustererkennung, welche die charakteristischen Lastabläufe erkennt, den Katalog entsprechend erweitert und die Häufigkeiten und die Abfolgen der einzelnen Muster untereinander speichert, erhöht ebenfalls die Genauigkeit in der Bestimmung der Ausfallwahrscheinlichkeit und die Kenntnisse über die Umgebungseinflüsse der Anlage. Dieses Konzept stellt daher eine erhebliche Verbesserung gegenüber den klassischen Klassierverfahren dar, ohne dass der notwendige Speicherbedarf im größeren Bedarf gesteigert wird.

Das so gewonnene Prozesswissen kann sowohl in der Steuerung und Regelung der Anlagen verwendet werden als auch Grundlage für Verbesserungen in der Lebensdauerberechnung und Versuchsplanung sein. Ebenso können auch hier die so erweiterten Kollektive auf Basis neuer Belastungsmuster bei der Entwicklung neuer Anlagen genutzt werden.

Im Folgenden wird die Erfindung anhand der in den Figuren dargestellten Ausführungsbeispiele näher beschrieben und erläutert. Es zeigen:
FIG 1 ein Berechnungsschema für die Bestimmung der Ausfallwahrscheinlichkeit und

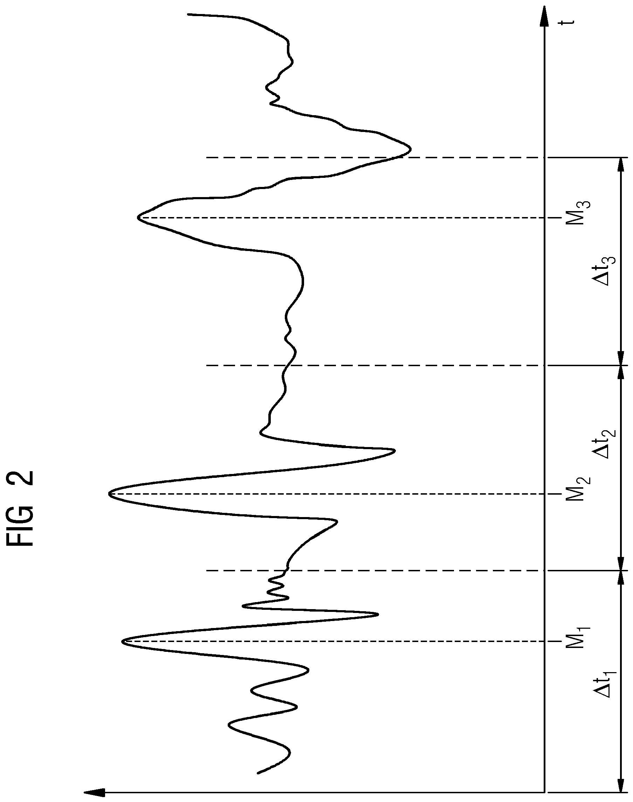

FIG 2 ein Beispiel einer Belastungs-Zeitfunktion.

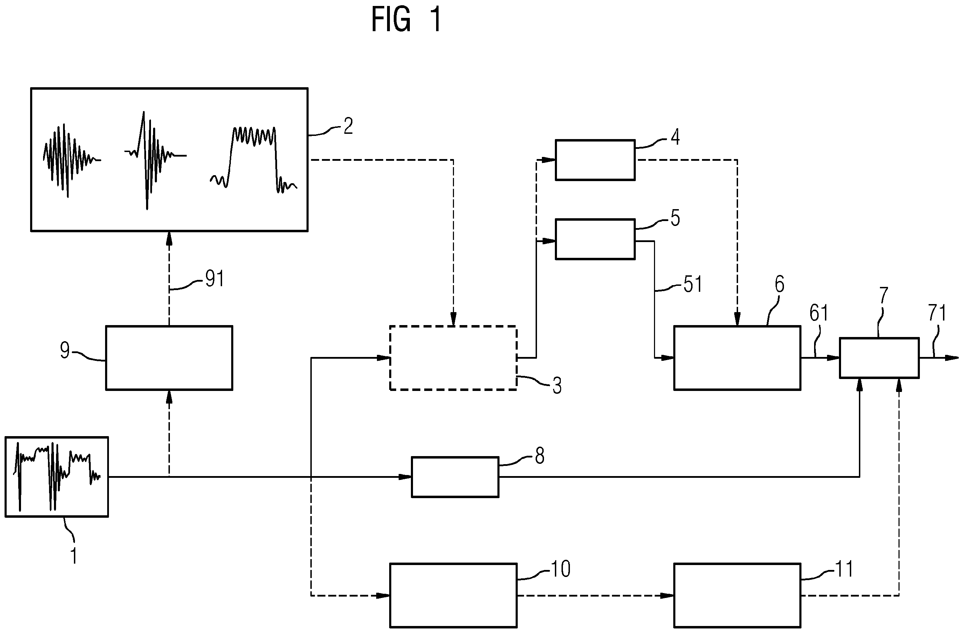

Die FIG 1 zeigt eine mögliche Ausgestaltung des Berechnungsschemas für die Bestimmung der Ausfallwahrscheinlichkeit 71 eines Maschinenelementes durch Gewaltbruch. Dabei wird mittels eines Sensors die Belastungs-Zeitfunktion 1 an einem Maschinenelement gemessen und in Zeitintervalle Δt unterteilt. Bei der gemessenen Größe kann es sich beispielsweise um eine mechanische, elektrische oder thermische Größe handeln. Diese wird optional zur Verbesserung der Berechnungsgenauigkeit der Ausfallwahrscheinlichkeit 71 mit einem Vergleicher 3 mit einer Menge 2 von Belastungsmustern verglichen. Stellt sich für ein Zeitintervall Δt und/oder durch den optionalen Vergleich mit der Menge 2 der Belastungsmuster eine relevante Belastung heraus, so wird mindestens ein Maximalwert M aus dem Zeitintervall Δt der Belastungs-Zeitfunktion 1 in einem Extremwertspeicher 5 gespeichert und als Extremwert 51 den folgenden Berechnungsschritten zur Verfügung gestellt. Optional kann bei Erkennung einer relevanten Belastung mittels des Vergleichs mit der Menge 2 der Belastungsmuster auch ein Zähler 4 angesteuert und ein darin gespeicherter Wert erhöht werden. Mit Hilfe der gespeicherten Extremwerte 51 erfolgt die Ermittlung 6 der statistischen Verteilfunktion 61. Dies kann auch optional unter Zuhilfenahme des Wertes des Zählers 4 erfolgen, um die Genauigkeit der Bestimmung der Ausfallwahrscheinlichkeit zu erhöhen. Die statistische Verteilungsfunktion wird dann im Anschluss der Bestimmung 7 der Ausfallwahrscheinlichkeit 71 zugeführt. Diese bestimmt dann die Ausfallwahrscheinlichkeit 71 des Maschinenelementes in der vorgesehenen Lebensdauer, bzw. in der noch verbleibenden Lebensdauer, die auch als Restlebensdauer bezeichnet wird. Für die Berechnung der Wahrscheinlichkeit ist eine Information über die Betriebsdauer, also die Zeit, die von der vorgesehenen Lebensdauer bereits durch Betrieb des Maschinenelementes verbraucht wurde, erforderlich. Diese kann aus der Belastungs-Zeitfunktion 1 beispielsweise mittels eines Betriebsdauerzählers 8, auch als Betriebsstundenzähler bezeichnet, ermittelt und der Bestimmung 7 der Ausfallwahrscheinlichkeit 71 zugeführt werden.

Zur weiteren Verbesserung der Genauigkeit bei der Berechnung der Ausfallwahrscheinlichkeit 71, kann mittels eines Bestimmungsblocks zur Erweiterung 9 der Menge der Belastungsmuster die Belastungs-Zeitfunktion auf neue Belastungsmuster hin untersucht werden. Diese können unter anderem dann vorliegen, wenn sich wiederholende Belastungen in der Belastungs-Zeitfunktion 1 auftreten. Die so ermittelten neuen Belastungsmuster 91 werden dann der Menge 2 von Belastungsmustern hinzugefügt und erweitern diese Menge. Zu Beginn der Bestimmung der Ausfallwahrscheinlichkeit 71, also zum Beginn des Betriebs des Maschinenelements, umfasst die Menge der Belastungsmuster vorbestimmte Belastungsmuster, die sich beispielsweise aus Simulationen oder Belastungstests ergeben.

Die Genauigkeit bei der Bestimmung der Ausfallwahrscheinlichkeit 71 kann auch dadurch weiter erhöht werden, dass das vorgeschlagene Verfahren um bereits bekannte Verfahren erweitert wird. Dies hat den Vorteil, dass dafür keine weiteren Eingangsinformationen benötigt werden, sondern diese bekannten Verfahren auch auf der Belastungs-Zeitfunktion 1 aufsetzen, die sich aus Messwerten eines oder mehrerer Sensoren ergibt. Dazu wird das Belastungs-Zeitsignal 1 einem Standardklassierverfahren 10 zugeführt. Durch das Standardklassierverfahren 10 wird ein Standardkollektiv 11 gebildet und gespeichert, das der Bestimmung 7 der Ausfallwahrscheinlichkeit 71 zugeführt wird.

Zusammenfassend betrifft die Erfindung ein Verfahren zum Erkennen und Bewerten von Extremlasten zum Schutz vor Gewaltbruch an einem Maschinenelement, wobei eine Belastungs-Zeitfunktion mittels mindestens einem Sensor am Maschinenelement gemessen wird. Zur Reduzierung der Gefahr eines Gewaltbruchs am Maschinenelement wird vorgeschlagen, dass die Belastungs-Zeitfunktion in Zeitintervalle zerlegt wird, wobei bei Vorliegen einer relevanten Belastung in dem Zeitintervall ein durch den Sensor erfasster Maximalwert der Belastungs-Zeitfunktion als Extremwert gespeichert wird, wobei aus den gespeicherten Extremwerten eine statistische Verteilungsfunktion ermittelt wird, wobei aus der statistischen Verteilungsfunktion und einer Restlebensdauer die Ausfallwahrscheinlichkeit des Maschinenelementes durch Gewaltbruch in einer für das Maschinenelement vorgesehenen Lebensdauer ermittelt wird, wobei sich die Restlebensdauer als Differenz der vorgesehenen Lebensdauer und einer Betriebsdauer des Maschinenelementes ergibt. Die Erfindung betrifft weiter ein Maschinenelement, ein Getriebe oder eine Windkraftanlage mit einer Überwachungseinrichtung, wobei die Überwachungseinrichtung zur Durchführung eines derartigen Verfahrens eingerichtet ist.

## Patentansprüche

1. Verfahren zum Erkennen und Bewerten von Extremlasten zum Schutz vor Gewaltbruch an einem Maschinenelement, wobei eine Belastungs-Zeitfunktion (1) mittels mindestens einem Sensor am Maschinenelement gemessen wird, wobei die Belastungs-Zeitfunktion (1) in Zeitintervalle (Δt) zerlegt wird, wobei bei Vorliegen einer relevanten Belastung in dem Zeitintervall (Δt) ein durch den Sensor erfasster Maximalwert (M) der Belastungs-Zeitfunktion (1) als Extremwert (51) gespeichert wird, wobei aus den gespeicherten Extremwerten (51) eine statistische Verteilungsfunktion (61) ermittelt wird, wobei aus der statistischen Verteilungsfunktion (61) und einer Restlebensdauer die Ausfallwahrscheinlichkeit (71) des Maschinenelementes durch Gewaltbruch in einer für das Maschinenelement vorgesehenen Lebensdauer ermittelt wird, wobei sich die Restlebensdauer als Differenz der vorgesehenen Lebensdauer und einer Betriebsdauer des Maschinenelementes ergibt.

2. Verfahren nach Anspruch 1, wobei die gemessenen Werte der Belastungs-Zeitfunktion (1) zur Bewertung einer relevanten Belastung mit einer Menge (2) von Belastungsmustern verglichen werden, wobei die Menge (2) der Belastungsmuster eine Menge von vorbestimmten Belastungsmuster umfasst, wobei bei Vorliegen einer relevanten Belastung ein zu diesem Belastungsmuster zugeordneter Zähler (4) erhöht wird.

3. Verfahren nach Anspruch 2, wobei die zeitliche Reihenfolge der zu den jeweiligen aufgetretenen relevanten Belastungen zugehörigen Belastungsmuster gespeichert wird.

4. Verfahren nach einem der Ansprüche 2 oder 3, wobei bei sich wiederholenden Zeitverläufen der Belastungs-Zeitfunktion (1) ein neues Belastungsmuster (91) in Abhängigkeit von den gemessenen Werte der Belastungs-Zeitfunktion (1) ermittelt wird, wobei das neue Belastungsmuster (91) zur Menge (2) der Belastungsmuster hinzugefügt wird.

5. Verfahren nach einem der Ansprüche 1 bis 4, wobei eine Warnung ausgegeben wird, wenn die Ausfallwahrscheinlichkeit (71) einen vorgegebenen Grenzwert überschreitet.

6. Maschinenelement, insbesondere eine Welle oder eine Verzahnung eines Getriebes oder eine Welle einer elektrischen Maschine, mit einer Überwachungseinrichtung, wobei die Überwachungseinrichtung zur Durchführung eines Verfahrens nach einem der Ansprüche 1 bis 5 eingerichtet ist.

7. Getriebe mit einem Maschinenelement, insbesondere mit einer Welle oder mit einer Verzahnung, nach Anspruch 6.

8. Windkraftanlage mit einem Maschinenelement, insbesondere mit einer Welle oder einer Verzahnung eines Getriebes oder mit einer Welle einer elektrischen Maschine, nach Anspruch 6 oder einem Getriebe nach Anspruch 7.
